# EUROPÄISCHE PATENTANMELDUNG

(11) **EP 4 156 417 A1**
(43) Veröffentlichungstag der Anmeldung: **29.03.2023**
(21) Anmeldenummer: 22196713.6
(22) Anmeldetag: 20.09.2022
(51) Int. Cl.: H01R 4/50, H01R 13/629

(54) **VORRICHTUNG ZUR ELEKTRISCHEN KONTAKTIERUNG EINES ELEKTROMOTORS**

(30) Priorität: 22.09.2021 DE 102021124569; 29.11.2021 DE 102021131270
(71) Anmelder: Schleich GmbH, 58675 Hemer (DE)
(72) Erfinder: Lahrmann, Martin, 58675 Hemer (DE)
(74) Vertreter: Schäperklaus, Jochen

(57) **Zusammenfassung**

Die Erfindung betrifft eine Vorrichtung (100) zur elektrischen Kontaktierung eines Elektromotors (106), umfassend elektrische Kontakte (200) und ein Gehäuse (101) mit einer Durchführung (102) und einem Kontaktierungsabschnitt (103), wobei das Gehäuse (101) einen Innenraum umgibt, wobei Kabel durch die Durchführung (102) in den Innenraum hineinführbar sind, wobei die Kabel mit den elektrischen Kontakten (200) elektrisch verbindbar sind, wobei der Kontaktierungsabschnitt (103) mechanisch mit dem Elektromotor verbindbar ist, wobei die elektrischen Kontakte (200) im Kontaktierungsabschnitt (103) angeordnet sind, wobei die elektrischen Kontakte (200) jeweils eine Spannzange (104) umfassen, wobei die Spannzangen (104) jeweils dazu ausgebildet sind, einen elektrischen Kontakt (105) des Elektromotors (106) zu umgreifen, wobei der elektrische Kontakt (105) des Elektromotors (106) ein umlaufendes Außengewinde aufweist, wobei das Außengewinde eine wendeiförmige Einkerbung zwischen Außenwänden des Außengewindes aufweist, wobei die Spannzangen (104) dazu ausgebildet sind, den jeweiligen elektrischen Kontakt (105) des Elektromotors (106) ausschließlich an der Außenwand des Außengewindes zu kontaktieren.

## Beschreibung

Die vorliegende Erfindung betrifft eine Vorrichtung zur elektrischen Kontaktierung eines Elektromotors gemäß dem Oberbegriff des Anspruchs 1.

Aus dem Stand der Technik sind Vorrichtungen bekannt, umfassend elektrische Kontakte und ein Gehäuse mit einer Durchführung und einem Kontaktierungsabschnitt. Das Gehäuse umgibt einen Innenraum, wobei Kabel durch die Durchführung in den Innenraum hineingeführt sind. Die Kabel sind mit den elektrischen Kontakten elektrisch verbindbar, wobei der Kontaktierungsabschnitt mechanisch mit dem Elektromotor verbindbar ist. In den im Stand der Technik bekannten Vorrichtungen umfassen die elektrischen Kontakte jeweils eine Spannzange, die mit dem elektrischen Kontakt des Elektromotors in Verbindung gebracht wird. Die Spannzangen sind hierbei auf die Geometrie der elektrischen Kontakte des Elektromotors abgestimmt und bilden das Gegenstück zu einem auf dem elektrischen Kontakt des Elektromotors umlaufendes Außengewindes. Bekannte Spannzangen greifen genau in Gewindegänge des Außengewindes ein. Zu diesem Zweck ist es erforderlich, die bekannten Spannzangen sehr weit zu öffnen und konisch zu schließen, um eine gewünschte Spannfunktion zu realisieren. Dies ist nur mit speziellen Materialien möglich, die zum einen teuer sind und bei bestimmten Materiallegierungen während der Verarbeitung gesundheitskritisch sein können.

An diesem Punkt setzt die Erfindung an.

Der vorliegenden Erfindung liegt die Aufgabe zu Grunde eine verbesserte elektrische Kontaktierung eines Elektromotors zu ermöglichen, wobei die Materialien am Markt erhältlich, kostengünstig und nicht gesundheitskritisch sind.

Diese Aufgabe wird durch eine Vorrichtung gemäß Anspruch 1, ein System gemäß Anspruch 11 und ein Verfahren gemäß Anspruch 12 gelöst. Ausführungsformen der Erfindung sind in den abhängigen Ansprüchen angegeben.

Die Vorrichtung umfasst elektrische Kontakte und ein Gehäuse mit einer Durchführung und einem Kontaktierungsabschnitt, wobei das Gehäuse einen Innenraum umgibt, wobei Kabel durch die Durchführung in den Innenraum hineinführbar sind, wobei die Kabel mit den elektrischen Kontakten elektrisch verbindbar sind, wobei der Kontaktierungsabschnitt mechanisch mit dem Elektromotor verbindbar ist, wobei die elektrischen Kontakte im Kontaktierungsabschnitt angeordnet sind, wobei die elektrischen Kontakte jeweils eine Spannzange umfassen, wobei die Spannzangen jeweils dazu ausgebildet sind, einen elektrischen Kontakt des Elektromotors zu umgreifen, wobei der elektrische Kontakt des Elektromotors ein umlaufendes Außengewinde aufweist, wobei das Außengewinde eine wendeiförmige Einkerbung zwischen Außenwänden des Außengewindes aufweist, wobei die Spannzangen dazu ausgebildet sind, den jeweiligen elektrischen Kontakt des Elektromotors ausschließlich an der Außenwand des Außengewindes zu kontaktieren.

Es ist zu beachten, dass im Rahmen dieser Beschreibung immer die Verbindung der Vorrichtung mit einem Elektromotor beschrieben wird. Dies soll ausdrücklich miteinschließen, dass die Vorrichtung auch dazu verwendet werden kann, nur einen Elektrostator als Bestandteil eines Elektromotors mit der Vorrichtung zu verbinden. Die Vorrichtung kann beispielsweise dazu genutzt werden, um einen Elektromotor mit einer Prüfvorrichtung zu verbinden, um unterschiedliche elektrische Prüfungen durchzuführen.

Die Kontaktierung der Spannzangen ausschließlich an den Außenwänden des Außengewindes hat den Vorteil, dass die Spannzangen keine Geometrie des Außengewindes abbilden müssen. Hierbei kann es insbesondere vorgesehen sein, dass die Spannzangen den jeweiligen elektrischen Kontakt des Elektromotors ausschließlich an den äußeren Enden der Außenwände des Außengewindes kontaktieren. Jedes Außengewinde weist an den äußeren Enden der Außenwände abgeflachte Bereiche auf, die eine planparallele Kontaktierung der Spannzangen ermöglichen. Es ist damit grundsätzlich möglich, nicht nur elektrische Kontakte mit einem Außengewinde, welches eine wendeiförmige Einkerbung aufweist, zu kontaktieren, sondern ebenfalls elektrische Kontakte mit anderen Geometrien, so lange dies elektrischen Kontakte äußere Enden aufweisen, die von der Spannzange kontaktiert werden können. Unter einer wendeiförmigen Einkerbung wird im Rahmen dieser Beschreibung insbesondere eine mit einer konstanten Steigung in einen Mantel eines Zylinders eingebrachte Einkerbung verstanden.

Der überraschende Effekt ist dabei, dass der Kontakt zwischen den Spannzangen und den Außenwänden oder sogar mit den äußeren Enden der Außenwände ausreichend ist, um unter Verwendung der Vorrichtung verschiedene Messungen am Elektromotor unter Verwendung einer Prüfvorrichtung durchzuführen.

Beispielsweise können die Spannzangen jeweils eine glatte Oberfläche aufweisen, die in Kontakt mit den äußeren Enden der Außenwände gelangen. Auch dies ist überraschenderweise als elektrischer Kontakt ausreichend.

Besonders vorteilhaft ist diese Tatsache, da die Spannzangen mechanisch einfacher gestaltet sein können als Spannzangen, die in das Außengewinde eingreifen. Diese wurden im Stand der Technik verwendet und waren aufwändig herzustellen.

Es besteht die Möglichkeit, dass die elektrischen Kontakte jeweils eine Spannhülse umfassen, wobei die Spannhülsen jeweils dazu ausgebildet sind, in einem ersten Zustand die Spannzangen zu öffnen und in einem zweiten Zustand die Spannzangen zu schließen, wobei in dem ersten Zustand die Spannzangen dazu ausgebildet sind, den jeweiligen elektrischen Kontakt des Elektromotors freizugeben und die Spannzangen in dem zweiten Zustand dazu ausgebildet sind, eine Kraft auf den jeweiligen elektrischen Kontakt des Elektromotors auszuüben. Die Spannhülsen sind dabei so ausgebildet, dass sie die Spannzangen von außen umschließen. Vorteilhafterweise ist es dabei möglich, dass sich die Spannhülsen relativ zu den Spannzangen bewegen lassen. Eine relative Bewegung zwischen Spannhülse und Spannzange kann beispielsweise durch eine Feder unterstützt werden, die zwischen Spannhülse und Spannzange angebraucht ist.

In dem ersten Zustand der Spannhülse umschließt diese die Spannzange wenig, wodurch sie Spannzange geöffnet wird und den elektrischen Kontakt des Elektromotors freigibt. In dem zweiten Zustand wird die Spannhülse über einen größeren Bereich der Spannzange gebracht und schließt die Spannzange damit. Die Spannzange und der elektrische Kontakt des Elektromotors werden in eine form- und kraftschlüssige Verbindung gebracht.

Es kann vorgesehen sein, dass die Vorrichtung einen Griff umfasst, der von einer ersten Position in eine zweite Position und umgekehrt schwenkbar ist, wobei in der ersten Position die Spannhülsen in dem ersten Zustand sind und in der zweiten Position die Spannhülsen in dem zweiten Zustand sind. Durch den Griff ist es einem Benutzer der Vorrichtung einfach möglich, die Kontaktierung zwischen elektrischem Kontakt der Vorrichtung und elektrischem Kontakt des Elektromotors zu lösen und zu festigen. Dies ist insbesondere bei der Durchführung von elektrischen Prüfungen vorteilhaft, da der Elektromotor nicht dauerhaft mit der Prüfvorrichtung verbunden werden soll.

Es besteht die Möglichkeit, dass die Spannzangen jeweils eine außen kegelförmige, radial und axial geschlitzte Form aufweisen. Vorteile der äußeren Form sind dadurch gegeben, dass die Spannhülse so besonders einfach relativ zu der Spannzange bewegt werden kann.

Weiterhin besteht die Möglichkeit, dass die Spannzangen jeweils eine zylinderförmige radiale Öffnung durch den Mittelpunkt der Spannzangen aufweisen, wobei die elektrischen Kontakte des Elektromotors in den zylinderförmigen radialen Öffnungen anordnenbar sind. Sind die elektrischen Kontakte in der zylinderförmigen, radialen Öffnung der Spannzangen angeordnet, kann die Spannzange geschlossen werden und eine Kraft auf den jeweiligen elektrischen Kontakt des Elektromotors ausgeübt werden. Die elektrische Kontaktierung zwischen Vorrichtung und Elektromotor kann dann erfolgen. Durch die Geometrie der Spannzange ist es möglich, dass die Spannzangen parallel und gleichzeitig schließt. Die Spannzange weist eine glatte Oberfläche an der Innenseite der Öffnung auf, die nach dem Schließen der Spannhülse mit den äußeren Enden der Außenwände des Außengewindes der elektrischen Kontakte des Elektromotors in Kontakt kommt. Diese Geometrie ermöglicht einen einfachen Aufbau der Spannzange. Weiterhin muss diese zur Aufnahme der elektrischen Kontakte nur minimal geöffnet werden. Es treten dabei keine großen Kräfte auf. Eine Verwendung von gut am Markt erhältlichen Materialien ist daher möglich.

Weiterhin kann vorgesehen sein, dass der Kontaktierungsabschnitt Ausnehmungen aufweist, in denen die elektrischen Kontakte angeordnet sind. Dies kann beispielsweise vorteilhaft sein, um die Vorrichtung elektrisch mit dem Elektromotor zu verbinden, wenn der Elektromotor beispielsweise hervorstehende elektrische Kontakte aufweist, die dann in die Ausnehmungen eingeführt werden können. Die elektrischen Kontakte der Vorrichtung können beispielsweise innerhalb des Innenraums sowohl in den Ausnehmungen des Kontaktierungsabschnitts als auch außerhalb dieser Ausnehmungen angeordnet sein. Außerhalb der Ausnehmungen können die elektrischen Kontakte beispielsweise mit Kabeln zur Verbindung mit einer Prüfvorrichtung verbindbar sein.

Es ist von Vorteil, wenn die elektrischen Kontakte jeweils eine Feder aufweisen, wobei die Federn dazu ausgebildet sind, bei einer Stellung des Griffes in der ersten Position die jeweiligen Spannhülsen in den ersten Zustand zu bringen. Die erste Position des Griffes entspricht der geöffneten Stellung der Spannzange. Hierfür ist es notwendig, dass die Spannhülse relativ zur Spannzange bewegt wird und sich Spannhülse und Spannzange nur wenig überschneiden. Bei einem Schwenken des Griffs in die erste Position wird eine Kraft auf die Feder entfernt. Die Feder entspannt sich und drückt die Spannhülse relativ zur Spannzange weg.

Darüber hinaus besteht die Möglichkeit, dass die Durchführung durchgehend eine Querschnittsfläche von mindestens 6 cm², vorzugsweise mindestens 10 cm², aufweist. Eine solche Durchführung ist besonders vorteilhaft zur Durchführung einer ausreichenden Anzahl an ausreichend dicken Kabeln zur Verbindung der Vorrichtung über die Kabel mit einer Prüfvorrichtung.

Es kann vorgesehen sein, dass der Kontaktierungsabschnitt je elektrischem Kontakt einen Abschnitt aufweist, der dazu ausgebildet ist, ein Gegenlager für die jeweilige Spannzange zu bilden. Als Gegenlager wird im Zusammenhang mit der Beschreibung ein Abschnitt des Kontaktierungsabschnitts verstanden, der als Auflagefläche für einen Teil der Spannhülse dienen kann. Wird durch das Schwenken des Griffs in die zweite Position die Spannzange geschlossen, erfolgt eine Kraftwirkung der Spannhülse auf die Spannzange um diese zusammen zu drücken. Dies erfolgt durch eine Bewegung der Spannhülse relativ zur Spannzange. Eine solche Kraft kann nur aufgebaut werden, wenn die Spannzange eine Gegenkraft entwickeln kann. Hierfür benötigt die Spannzange eine Auflagefläche, die durch das Gegenlager gebildet wird.

Das System gemäß Anspruch 11 umfasst eine Vorrichtung nach einer Ausführungsform der Erfindung und den Elektromotor. Der Elektromotor ist mechanisch mit dem Kontaktierungsabschnitt verbunden und mit den elektrischen Kontakten elektrisch verbunden, wobei die Spannzangen jeweils ausschließlich die Außenwände der elektrischen Kontakte des Elektromotors kontaktieren.

Das Verfahren gemäß Anspruch 12 zur elektrischen Kontaktierung eines Elektromotors unter Verwendung des Systems nach einer Ausführungsform der Erfindung umfasst wenigstens die folgenden Schritte: Mechanische Verbindung des Kontaktierungsabschnittes mit dem Elektromotor, Schwenken des Griffes von der ersten Position in die zweite Position, wobei durch das Schwenken des Griffs die Spannhülsen von dem ersten Zustand in den zweiten Zustand gebracht werden und die Spannzangen geschlossen werden, wobei durch das Schließen der Spannzangen eine Kontaktierung der Spannzangen und der elektrischen Kontakte des Elektromotors ausschließlich an den Außenwänden des jeweiligen Außengewindes, vorzugsweise ausschließlich an den äußeren Enden der Außenwände des Außengewindes erfolgt.

Weitere Merkmale und Vorteile von Ausführungsbeispielen der Erfindung werden unter Bezugnahme auf die Zeichnungen nachfolgend beschrieben. Dabei werden für gleiche oder ähnliche Teile und für Teile mit gleichen oder ähnlichen Funktionen dieselben Bezugszeichen verwendet. Es zeigen:
- Fig. 1: eine schematische perspektivische Ansicht einer Vorrichtung nach einer Ausführungsform der Erfindung;
- Fig. 2: eine schematische Schnittansicht der Vorrichtung aus Figur 1;
- Fig. 3: eine vergrößerte Teilansicht der Schnittansicht aus Figur 2,
- Fig. 4: eine vergrößerte Teilansicht einer Vorrichtung

Es ist nicht notwendig, dass eine erfindungsgemäße Vorrichtung alle nachfolgend beschriebenen Merkmale aufweist. Es ist auch möglich, dass eine erfindungsgemäße Vorrichtung nur einzelne Merkmale der nachfolgend beschriebenen Ausführungsbeispiele aufweist.

Die Vorrichtung 100 ist als Verbindungsstecker mit einem Gehäuse 101, einer Durchführung 102, einem Kontaktierungsabschnitt 103 und einem Griff 108 ausgebildet. In einem vom Gehäuse 101 umgebenen Innenraum sind elektrische Kontakte angeordnet, die bis in den Kontaktierungsabschnitt 103 hineinragen. Durch die Durchführung 102 können Kabel in den Innenraum geführt werden, die mit den elektrischen Kontakten 200 elektrisch verbunden sind.

Im Betrieb wird der Kontaktierungsabschnitt 103 mechanisch mit einem Elektromotor 106 verbunden, sodass die elektrischen Kontakte 200 der Vorrichtung 100 in Kontakt mit elektrischen Kontakten 105 des Elektromotors 106 sind.

Zu diesem Zweck können die elektrischen Kontakte 200 der Vorrichtung 100 Spannzangen 104 umfassen, die bei einer Schwenkbewegung des Griffs 108 in eine erste Position die elektrischen Kontakte 105 des Elektromotors 106 fest umgreifen. Wenn der Griff 108 in eine zweite Position geschwenkt wird, lösen sich die Spannzangen 104 von den elektrischen Kontakten 105 des Elektromotors 106, sodass die Vorrichtung 100 einfach vom Elektromotor entfernt werden kann, um beispielsweise mit einem anderen Elektromotor verbunden zu werden. Die Vorrichtung 100 kann beispielsweise verwendet werden, um eine Prüfvorrichtung mit einem Elektromotor zu verbinden. Die Prüfvorrichtung kann dann über die Kabel, die durch die Durchführung 102 in den Innenraum ragen, mit den elektrischen Kontakten 200 der Vorrichtung 100 verbunden sein. Außerdem kann die Vorrichtung 100 - wie oben beschrieben - schnell und einfach elektrisch mit einem Elektromotor verbunden und von ihm gelöst werden.

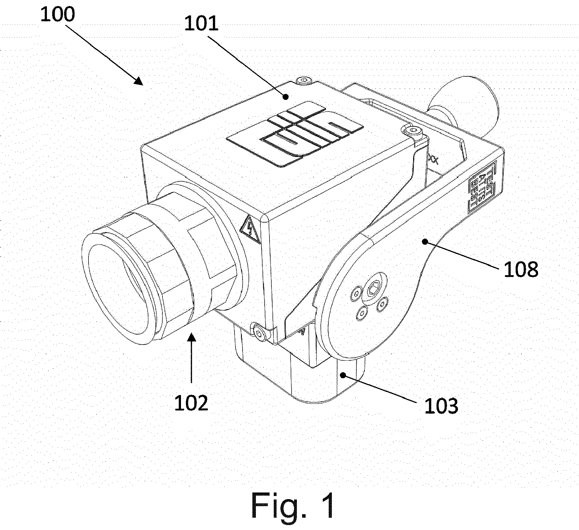

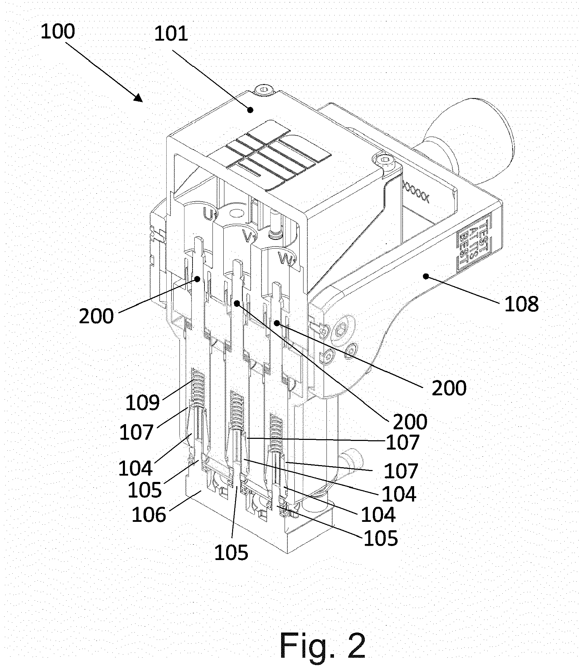

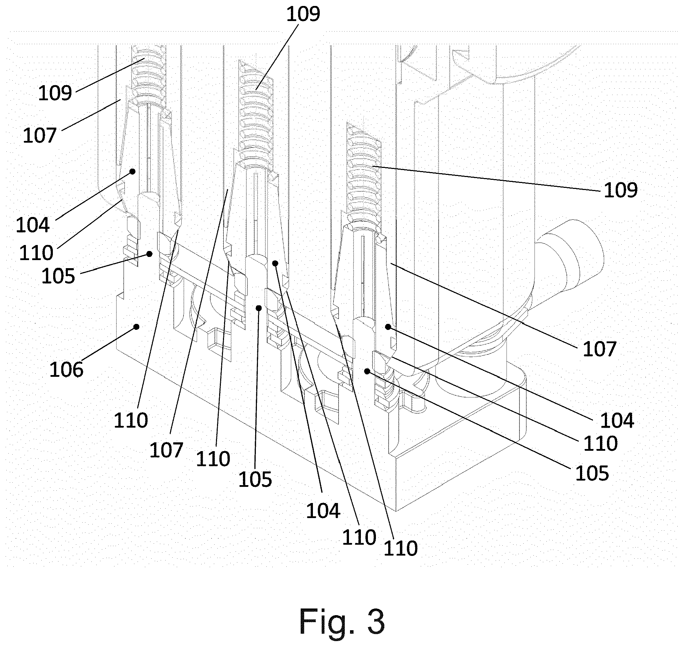

Figur 2 zeigt eine schematische Schnittansicht der Vorrichtung aus Figur 1 und Figur 3 zeigt eine vergrößerte Teilansicht der Schnittansicht aus Figur 2.

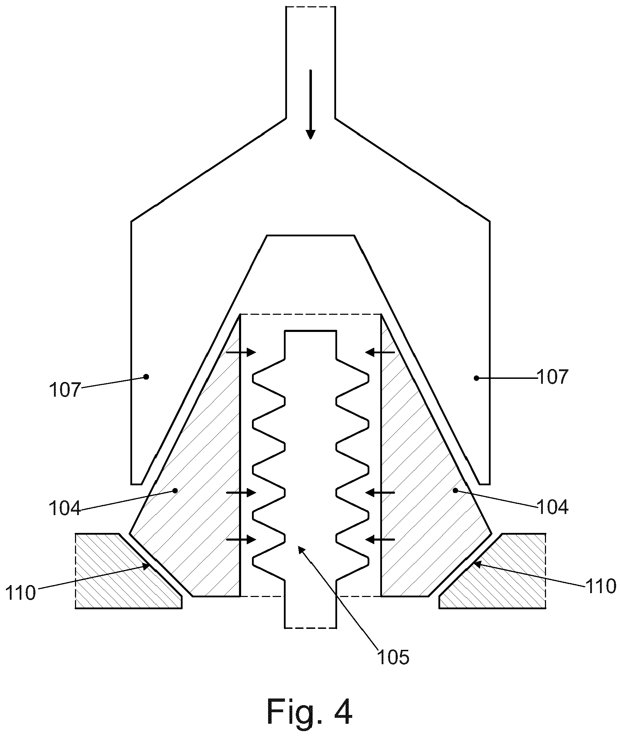

In Figur 2 und Fig. 3 ist erkennbar, dass die elektrischen Kontakte 105 des Elektromotors 106 in zylinderförmige radiale Öffnungen der Spannzangen 104 hineinragen. Die elektrischen Kontakte 105 des Elektromotors 106 weisen ein in Fig. 4 schematisch dargestelltes umlaufendes Außengewinde auf mit wendelförmigen Einkerbungen zwischen Außenwänden des Außengewindes. Die Spannzangen 104 sind dazu ausgebildet, den jeweiligen elektrischen Kontakt 105 des Elektromotors 106 ausschließlich an der Außenwand des Außengewindes zu kontaktieren. Beispielsweise können die Spannzangen 104 eine glatte Oberfläche aufweisen, die in Kontakt mit dem Außengewinde gelangt.

Hierzu umfassen die elektrischen Kontakte 200 Spannhülsen 107, die von außen um die Spannzangen 104 greifen. Durch eine Bewegung der Spannhülsen 107 relativ zur den Spannzangen 104 werden die Spannzangen 104 geschlossen und der Kontakt zwischen Spannzange 104 und Außenwand des Außengewindes hergestellt. Um die hierfür erforderliche Kraft aufnehmen zu können, weist der Kontaktierungsabschnitt 103 je elektrischem Kontakt einen Abschnitt 110 auf, der dazu ausgebildet ist, ein Gegenlager für die jeweilige Spannzange zu bilden.

Wird der Griff 108 in die zweite Position geschwenkt, wird die Kraft von der Spannhülse 107 genommen und durch die Feder 109 die Spannhülse 107 relativ zur Spannzange 104 verschoben. Dadurch wird die Spannzange 104 geöffnet und der der elektrische Kontakt 105 des Elektromotors 106 freigegeben. Aus Gründen der Übersichtlichkeit sind nicht alle Federn in Figur 2 mit einem Bezugszeichen versehen.

Der überraschende Effekt ist, dass alleine der Kontakt zwischen der Spannzange und der Außenwand des Außengewindes, ja sogar der Kontakt zwischen der Spannzange und dem äußeren Ende der Außenwand des Außengewindes, für den elektrischen Stromfluss ausreicht, um am Elektromotor unter Verwendung einer Prüfvorrichtung verschiedene Messungen durchzuführen.

## Patentansprüche

1. Vorrichtung (100) zur elektrischen Kontaktierung eines Elektromotors (106), umfassend elektrische Kontakte (200) und ein Gehäuse (101) mit einer Durchführung (102) und einem Kontaktierungsabschnitt (103), wobei das Gehäuse (101) einen Innenraum umgibt, wobei Kabel durch die Durchführung (102) in den Innenraum hineinführbar sind, wobei die Kabel mit den elektrischen Kontakten (200) elektrisch verbindbar sind, wobei der Kontaktierungsabschnitt (103) mechanisch mit dem Elektromotor verbindbar ist, wobei die elektrischen Kontakte (200) im Kontaktierungsabschnitt (103) angeordnet sind, wobei die elektrischen Kontakte (200) jeweils eine Spannzange (104) umfassen, wobei die Spannzangen (104) jeweils dazu ausgebildet sind, einen elektrischen Kontakt (105) des Elektromotors (106) zu umgreifen, wobei der elektrische Kontakt (105) des Elektromotors (106) ein umlaufendes Außengewinde aufweist, wobei das Außengewinde eine wendeiförmige Einkerbung zwischen Außenwänden des Außengewindes aufweist, wobei die Spannzangen (104) dazu ausgebildet sind, den jeweiligen elektrischen Kontakt (105) des Elektromotors (106) ausschließlich an der Außenwand des Außengewindes zu kontaktieren.

2. Vorrichtung nach Anspruch 1, **dadurch gekennzeichnet, dass** die Spannzangen (104) den jeweiligen elektrischen Kontakt (105) des Elektromotors (106) ausschließlich an den äußeren Enden der Außenwände des Außengewindes kontaktieren.

3. Vorrichtung (100) nach Anspruch 1 bis 2, **dadurch gekennzeichnet, dass** die elektrischen Kontakte (200) jeweils eine Spannhülse (107) umfassen, wobei die Spannhülsen (107) jeweils dazu ausgebildet sind, in einem ersten Zustand die Spannzangen (104) zu öffnen und in einem zweiten Zustand die Spannzangen (104) zu schließen, wobei in dem ersten Zustand die Spannzangen (104) dazu ausgebildet sind, den jeweiligen elektrischen Kontakt (105) des Elektromotors (106) freizugeben und die Spannzangen (104) in dem zweiten Zustand dazu ausgebildet sind, eine Kraft auf den jeweiligen elektrischen Kontakt (105) des Elektromotors (106) auszuüben.

4. Vorrichtung (100) nach dem vorherigen Anspruch, **dadurch gekennzeichnet, dass** die Vorrichtung (100) einen Griff (108) umfasst, der von einer ersten Position in eine zweite Position und umgekehrt schwenkbar ist, wobei in der ersten Position die Spannhülsen (107) in dem ersten Zustand sind und in der zweiten Position die Spannhülsen (107) in dem zweiten Zustand sind.

5. Vorrichtung (100) nach einem der Ansprüche 1 bis 3, **dadurch gekennzeichnet, dass** die Spannzangen (104) jeweils eine außen kegelförmige, radial und axial geschlitzte Form aufweisen.

6. Vorrichtung (100) nach einem der Ansprüche 1 bis 5, **dadurch gekennzeichnet, dass** die Spannzangen (104) jeweils eine zylinderförmige radiale Öffnung durch den Mittelpunkt der Spannzangen (104) aufweisen, wobei die elektrischen Kontakte (105) des Elektromotors (106) in den zylinderförmigen radialen Öffnungen anordnenbar sind.

7. Vorrichtung (100) nach einem der vorherigen Ansprüche, **dadurch gekennzeichnet, dass** der Kontaktierungsabschnitt (103) Ausnehmungen aufweist, in denen die elektrischen Kontakte (200) angeordnet sind.

8. Vorrichtung (100) nach einem der vorherigen Ansprüche, **dadurch gekennzeichnet, dass** die elektrischen Kontakte (200) jeweils eine Feder (109) aufweisen, wobei die Federn (109) dazu ausgebildet sind, bei einer Stellung des Griffes (108) in der ersten Position die jeweiligen Spannhülsen (107) in den ersten Zustand zu bringen.

9. Vorrichtung (100) nach einem der vorherigen Ansprüche, **dadurch gekennzeichnet, dass** die Durchführung (102) durchgehend eine Querschnittsfläche von mindestens 6 cm², vorzugsweise mindestens 10 cm², aufweist.

10. Vorrichtung (100) nach einem der vorherigen Ansprüche, **dadurch gekennzeichnet, dass** der Kontaktierungsabschnitt (103) je elektrischem Kontakt (200) einen Abschnitt (110) aufweist, der dazu ausgebildet ist, ein Gegenlager für die jeweilige Spannzange (104) zu bilden.

11. System, umfassend eine Vorrichtung (100) nach einem der vorherigen Ansprüche und den Elektromotor (106), wobei der Elektromotor (106) mechanisch mit dem Kontaktierungsabschnitt (103) verbunden ist, und wobei der Elektromotor (106) mit den elektrischen Kontakten (200) elektrisch verbunden ist, wobei die Spannzangen (104) jeweils ausschließlich die Außenwände der elektrischen Kontakte (105) des Elektromotors (106) kontaktieren.

12. Verfahren zur elektrischen Kontaktierung des Elektromotors (106) unter Verwendung des Systems nach dem vorherigen Anspruch, umfassend wenigstens die folgenden Schritte:
- Mechanische Verbindung des Kontaktierungsabschnittes (103) mit dem Elektromotor (106),
- Schwenken des Griffes (108) von der ersten Position in die zweite Position, wodurch durch das Schwenken des Griffs (108)
- die Spannhülsen (107) von dem ersten Zustand in den zweiten Zustand gebracht werden und
- die Spannzangen (104) geschlossen werden, wobei durch das Schließen der Spannzangen (104) eine Kontaktierung der Spannzangen (104) und der elektrischen Kontakte (105) des Elektromotors (106) ausschließlich an den Außenwänden des jeweiligen Außengewindes, vorzugsweise ausschließlich an den äußeren Enden der Außenwände des Außengewindes, erfolgt.
